# EUROPEAN PATENT SPECIFICATION

(11) **EP 2 609 713 B1**
(45) Date of publication and mention of the grant of the patent: **16.05.2018**
(21) Application number: 11820222.5
(22) Date of filing: 29.08.2011
(51) Int. Cl.: H04L 12/16, H04L 29/06, H04L 12/28, H04L 12/58

(54) **METHOD AND APPARATUS FOR SHARING MEMO BY USING UPNP TELEPHONY**
VERFAHREN UND VORRICHTUNG ZUM AUSTAUSCH VON KURZNACHRICHTEN MITHILFE EINER UPNP-TELEPHONIE
PROCÉDÉ ET APPAREIL ADAPTÉS POUR PARTAGER UN MÉMO AU MOYEN D'UN SYSTÈME DE TÉLÉPHONIE UPNP

(30) Priority: 25.08.2011 KR 20110085205; 27.08.2010 US 377569 P
(43) Date of publication of application: 03.07.2013
(73) Proprietor: Samsung Electronics Co., Ltd., Gyeonggi-do 443-742 (KR)
(72) Inventor: LEE, Joo-Yeol, Seongnam-si Gyeonggi-do 463-720 (KR); RAHMAN, Mahfuzur, San Jose, California 95134 (US); MAENG, Je-Young, Suwon-si Gyeonggi-do 443-470 (KR); PARK, Ho-Yeon, Seoul 137-793 (KR)
(74) Representative: HGF Limited
(86) International application number: PCT/KR2011/006371
(87) International publication number: WO 2012/026795

(56) References cited:
- EP-A1- 1 686 747
- WO-A2-2007/095355
- US-A1- 2005 108 430
- US-A1- 2008 143 517
- US-A1- 2008 243 869

## Description

### Technical Field

The present invention relates to a UPnP (Universal Plug and Play) protocol, and more particularly to a method and an apparatus for sharing a memo by using a telephony service.

### Background Art

In general, a home network includes a private network based on an Internet Protocol (hereinafter, referred to as an "IP"). Such a home network connects various devices such as a Personal Computer (PC), an intelligent product, and a wireless device to one network through middleware, which is a common virtual computing environment, to control them. Here, middleware enables communication between various devices by connecting the devices in a peer-to-peer manner. Up to now, HAVI (Home AV Inter-operability), UPnP (Universal Plug and Play), Jini (Java Intelligent Network Infrastructure), HWW (Home Wide Web), etc. are proposed as middleware.

In a computing environment constructed by UPnP middleware among the listed middleware, each device receives an allocation of an address from a server according to a Dynamic Host Configuration Protocol (DHCP), or an address selected through an auto IP (Internet Protocol) designating function. Through the allocation of the address, devices communicate with each other, and search and inquiry are performed on a network.

A UPnP network pertains to a home network technology most frequently used at present. The UPnP network defines a UPnP device, a UPnP service, and a protocol between the UPnP device and the UPnP service. Such a UPnP network includes a Controlled Device (CD), which is a home network device controlled while being connected to an IP based home network, and a Control Point (CP), which is a device controlling the controlled device. The control point is a device, which performs a control for the controlled device. The control point requests an event from the controlled device, and receives the event from the controlled device. The controlled device is a device, which performs a function determined according to a request of the control point. The controlled device transmits the requested event to the control point having requested the event when a state of the controlled device is changed.

UPnP network devices as configured above perform an advertisement process, a discovery process, a description process, a control process, and an event process.

The advertisement process is a process in which a new controlled device is connected to a home network to notify its existence to other devices on the home network.

The discovery process is a process in which a new control point is connected to a home network to search for controlled devices operating on the home network.

The description process is a process in which the control point parses a service description XML (eXtensible Markup Language) file or a device description XML file to figure out a function of a newly added device through an IP address of the searched controlled device in order to control the controlled device.

The control process is a process in which, when the control point desires to provide a specific service through the controlled device, the control point transmits a control message (action request) including a request for a predetermined service to the corresponding controlled device by using a SOAP (Simple Object Access Protocol) according to a UPnP device architecture and receives a response message (result, variable value) in response to the control message.

The event process is a process in which the control point identifies a change state for information of the controlled device having provided the predetermined service by the control command transmitted from the control point.

In a current UPnP telephony WC, a device with a telephony function is controlled by using a device without a telephony function within a home network based on the aforementioned UPnP. Accordingly, a standard by which a communication is possible is being established.

EP-1686747-A1 describes a system and method for implementing an instant messaging remote control service, wherein a control point discovers a device, retrieves a device description associate with the device from the device, and retrieves an instant messaging remote control service description from the device wherein the description of the instant messaging remote control service may define one or more actions for remotely controlling an instant messaging client.

WO-2007/095355-A2 describes an interface to a home network to provide control of video and audio communications between the home network and one or more external audio/video device.

### Disclosure of Invention

### Technical Problem

Accordingly, the present invention has been made to solve the above stated problems occurring in the prior art, and an aspect of the present invention provides a method and an apparatus for sharing a memo in a network by using the UPnP telephony service.

### Solution to Problem

In accordance with a first aspect of the present invention, there is provided a method of sharing a memo by using UPnP telephony, the method comprising: receiving a request for a memo service from one or more devices by a telephony server; receiving memo information to be shared from a first telephony control point by the telephony server; notifying, by the telephony server, the received memo information to the one or more devices having made the request for the memo service; receiving a registration for a memo delivery from one of the devices having made the request for the memo service; and transferring a memo according to a memo delivery method included in the registration for the memo delivery; wherein the registration for the memo delivery includes the memo delivery method and information for a period of deregistration.

Also disclosed is a method of sharing a memo by using a UPnP telephony, the method including: receiving a request for a memo service from one or more devices by a telephony server; receiving memo information to be shared from a first telephony control point by the telephony server; and notifying, by the telephony server, the received memo information to the one or more devices having made the request for the memo service.

The memo information to be shared may include memo ID information and memo contents information.

The method may further include receiving a registration for a memo delivery from one of the devices having made the request for the memo service; and transferring a memo according to a memo delivery method included in the registration for the memo delivery.

The registration for the memo delivery may include the memo delivery method and information for a period of deregistration.

The memo delivery method may include one or more information elements of an e-mail address, a telephone number, and an SIP address.

When the memo delivery method includes the SIP address information, the telephony server may transfer a memo by using an SIP MESSAGE.

When the memo delivery method includes the telephone number, the telephony server may transfer a memo by using an SMS.

When the memo delivery method includes the e-mail address information, the telephony server may transfer a memo by using a SMTP.

The method may further include, when a home network to which the telephony server pertains is connected to another home network through a UPnP remote access, transferring the memo information to be shared to a device, which pertains to said another home network, having subscribed the memo service.

In accordance with a second aspect of the present invention, there is provided an apparatus for sharing a memo by using UPnP telephony, the apparatus comprising a telephony server. The telephony server is arranged to: receive a request for a memo service from one or more devices; when the telephony server receives memo information to be shared from a first telephony control point, notify the received memo information to the one or more devices having made the request for the memo service; receive a registration for a memo delivery from one of the devices having made the request for the memo service; and transfer a memo according to a memo delivery method included in the registration for the memo delivery; wherein the registration for the memo delivery includes the memo delivery method and information for a period of deregistration.

Also disclosed is an apparatus for sharing a memo by using a UPnP telephony, the apparatus including: a telephony server for receiving a request for a memo service from one or more devices, and when the telephony server receives memo information to be shared from a first telephony control point, notifying the received memo information to the one or more devices having made the request for the memo service.

### Advantageous Effects of Invention

The present invention can share a memo in a home network by using a UPnP telephony service, and share a memo in an outside of a home network as well as in an inside of the home network by using a mobile communication device.

### Brief Description of Drawings

The above and other aspects, features and advantages of the present invention will be more apparent from the following detailed description taken in conjunction with the accompanying drawings, in which:
FIG. 1 illustrates a construction of a UPnP telephony service used in the present invention;
FIG. 2 is a block diagram schematically illustrating a memo sharing system using a UPnP telephony according to an embodiment of the present invention;
FIG. 3 illustrates a flow of a memo sharing operation using a UPnP telephony according to an embodiment of the present invention;
FIG. 4 illustrates a flow of a memo sharing operation using an SIP connection between a telephony server and a mobile device according to an embodiment of the present invention;
FIG. 5 is a block diagram schematically illustrating memo sharing between two home networks using a UPnP remote access according to an embodiment of the present invention; and
FIG. 6 illustrates a flow of a memo sharing operation between two home networks using an SIP message according to an embodiment of the present invention.

### Mode for the Invention

Hereinafter, the first exemplary embodiments of the present invention will be described with reference to the accompanying drawings. Specific matters found in the following description, such as a detailed explanation of components are provided only to help general understanding of the present invention, and it is apparent to those skilled in the art that various changes and modifications may be made therein without departing from the scope of the invention as defined by the appended claims. Further, in the following description of the present invention, a detailed description of known functions and configurations incorporated herein will be omitted when it may make the subject matter of the present invention rather unclear.

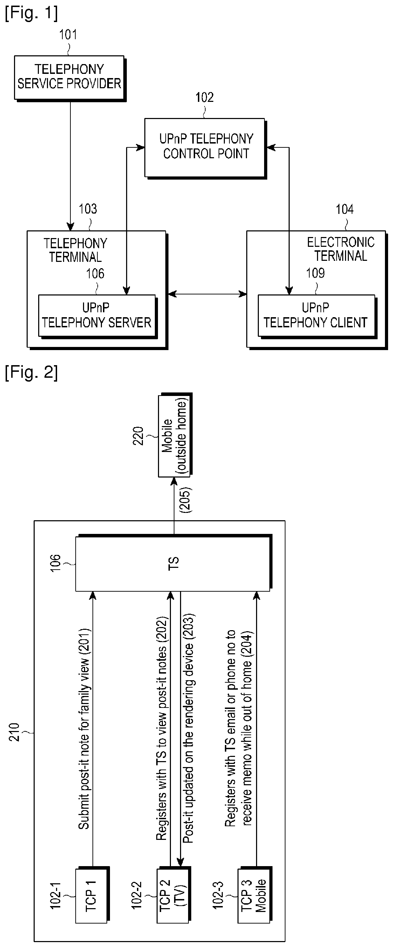

FIG. 1 illustrates a construction of a UPnP telephony service used in the present invention.

A UPnP telephony system according to an embodiment of the present invention includes a telephony service provider 101, a UPnP (Universal Plug and Play) telephony control point 102 (hereinafter, referred to as a control point), a telephony terminal 103, and an electronic device 104. Here, the telephony terminal 103 and the electronic device 104 are located within a space where communication is possible by using the control point 102 and a UPnP protocol.

The telephony service provider 101 provides a telephony service, and provides an interface for transmitting and receiving a call to the telephony terminal 103.

The UPnP telephony control point 102 is a logical software module, which controls a UPnP telephony sever 106 and a UPnP telephony client 109 by using a UPnP action. The UPnP telephony control point 102 may be included in a device such as a PC (Personal Computer), a smart phone, or a PDA (Personal Digital Assistant) separately from the telephony terminal 103 and the electronic device 104, but may be also included in a physical device such as the telephony terminal 103 or the electronic device 104. If the UPnP telephony control point 102 is included in the physical device such as the telephony terminal 103 or the electronic device 104, the UPnP telephony control point 102 can directly control the UPnP telephony server 106 or the UPnP telephony client 109 without the use of the UPnP action.

The UPnP telephony control point 102 determines a medium, a protocol, and a transmission format, which will be used for a call transmission/reception, by using capability information of a call data transmission agent included in the UPnP telephony server 106 or the UPnP telephony client 109 and transmitted from the UPnP telephony server 106. Further, the UPnP telephony control point 102 creates a profile defining the determined medium, protocol, and transmission format to transmit the created profile to the UPnP telephony server 106 or the UPnP telephony client 109. As a result, the UPnP telephony control point 102 sets an environment of the call data transmission agent included in the telephony terminal 103 or the electronic device 104.

The telephony terminal 103 is a CE (Computer Engineering) device such as a telephone, a PC including a VoIP (Voice over IP) configured by software, or a physical device such as a mobile communication terminal, which is in conjunction with a communication network. The telephony terminal 103 includes the UPnP telephony server 106 configured by software. Further the telephony terminal 103 controls a call transmission/reception by using the telephony service provider 101 providing a telephony service and an interface provided by the corresponding telephony service provider 101.

The electronic device 104 is a mobile communication terminal, a CE device, which can input and output user voice or image, such as a video telephone, and a physical device such as a PC or a TV, and includes the UPnP telephony client 109 configured by software. As described above, in the present invention, the user can conveniently transmit and receive a call at home by using the home network system.

FIG. 2 is a block diagram schematically illustrating a memo sharing system using a UPnP telephony according to an embodiment of the present invention.

Referring to FIG. 2, the memo sharing system using the UPnP telephony according to the embodiment of the present invention includes a plurality of Telephony Control Points (TCPs) 102 and the telephony server 106 for receiving a memo from the TCP 102, which desires to provide the memo, to provide the memo to other TCPs 102. The TCP 102 and the telephony server 106 are included in a home network 210.

Referring to FIG. 2, in an operation of each construction, first, a TCP #1 102-1 provides 201 a memo to be shared with members in the home network, that is, a post-it note to the telephony server 106.

A TCP #2 102-2 performs a registration 202 in the telephony server 106 to view the post-it note, and the telephony server 106 updates the post-it note on a rendering device.

A TCP #3 102-3 can register an e-mail address or a telephone number in the telephony server 106 in order not to receive the memo while a user of the TCP #3 102-3 is out, and the post-it note is renewed or transmitted 205 to a mobile device 220 through an e-mail or, an SMS or SIP message while the user of the TCP #3 102-3 is out.

As described above, the TCP 102 of the home network can transfer the post-it notes to the telephony server 106, and the post-it notes are notified or transmitted to a rendering device, which is a TCP in which a renewed post-it note is registered.

Further, the TCP 102 can search for or delete a post-it note according to a date or a subject.

The TCP 102 can register an e-mail address, a telephone number, an SIP address, etc. in the telephony server 106 in order to transfer a post-it note to a specific device.

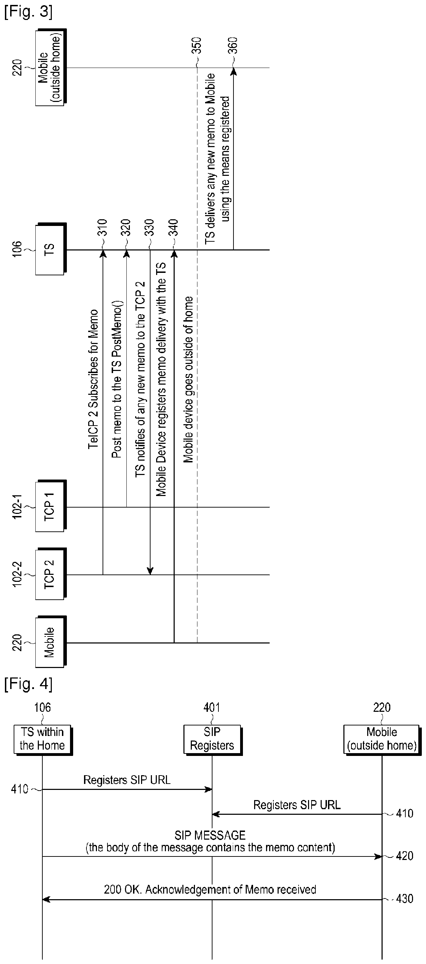

FIG. 3 illustrates a flow of a memo sharing operation using a UPnP telephony according to an embodiment of the present invention.

First, in step 310, the TCP #2 102-2 requests a memo service from the telephony server 106.

In step 320, the TCP #1 102-1 transfers a memo to the telephony server 106. The memo includes memo ID information and memo contents information. In an embodiment of the present invention, a PostMemo() action may be used to transfer a memo. In step 330, the telephony server 106 notifies a new memo to the TCP #2 102-2.

In step 340, the mobile device 220 performs a registration in the telephony server 106 for a memo delivery when a user moves to an outside. In the registration, a method of the memo delivery (MemoDeliveryMethod) such as an e-mail address or SMS number delivery, and information for a period of deregistration are transferred to the telephony server 106. A RegisterMemoDelivery() may be used for the registration for the memo delivery.

Thereafter, in step 350, when the mobile device 220 moves to an outside of the home, the telephony server 106 transfers the memo to the mobile device 220 located outside the home by using a registered means in step 360.

The method of memo delivery may include one or more information elements of an e-mail address, a telephone number, and an SIP address. When the memo delivery method includes the SIP address information, the telephony server may transfer a memo by using an SIP MESSAGE. When the memo delivery method includes the telephone number, the telephony server may transfer a memo by using an SMS. When the memo delivery method includes the e-mail address information, the telephony server may transfer a memo by using a SMTP.

Meanwhile, although not illustrated in FIG. 3, an operation, which corresponds to a reverse case of the registration for the memo delivery, for removing the registration for the memo delivery may be performed so that it is used when the mobile device moves to an inside of the home. At this time, a UnregisterMemoDelivery() action may be used for removing the registration.

FIG. 4 illustrates a flow of a memo sharing operation using an SIP connection between the telephony server and the mobile device according to an embodiment of the present invention.

FIG. 4 illustrates an operation in which the telephony server and the mobile device having moved to an outside the home have an SIP address, register in an SIP register to access each other, and share a memo through the SIP.

First, in step 410, the telephony server 106 inside the home and the mobile device 220 outside the home register an SIP URL in the SIP register 401. In step 420, the telephony server 106 transfers an SIP message to the mobile device 220 outside the home. At this time, memo contents are included in the body of the message. In step 430, the mobile device 220 transmits an acknowledgement 200 OK for the received memo to the telephony server 106.

The operation illustrated in FIG. 4 shows a method of transferring the memo to the mobile device outside the home by using an SIP MESSAGE method. Further, the memo may be transferred from an outside of the home to an inside of the home after the SIP MESSAGE is transferred from the mobile device to the telephony server. As another approach, there is a method of transferring the memo between the telephony server and the mobile device by using an SIP INVITE message.

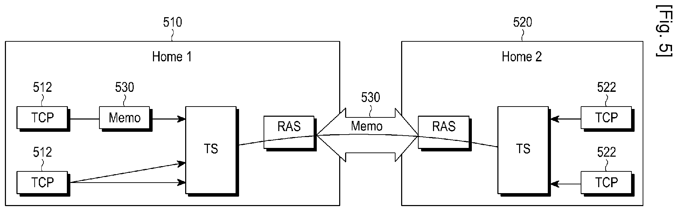

FIG. 5 is a block diagram schematically illustrating memo sharing between two home networks using a UPnP remote access according to an embodiment of the present invention.

FIG. 5 illustrates a configuration for sharing a memo between two home networks through the UPnP remote access. The telephony server in each of the home networks 510 and 520 aggregates a memo 530 from each of home network devices (TCP) 512 and 522, and transmits the memo to other homes. However, in this case, it is possible to transmit only memos, which are allowed to be shared with other home networks, to other home networks. Accordingly, it is required to set a tag for each of types such as a type of sharing a memo only in its own home network and a type of sharing a memo with other predetermined home networks. A telephony server in one home network can operate the UPnP for a telephony server in another home network for the memo transmission between two home networks.

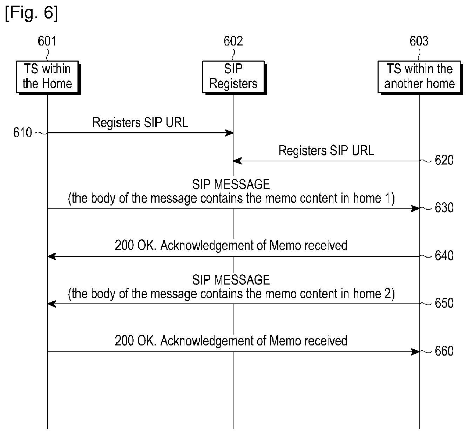

FIG. 6 illustrates a flow of a memo sharing operation between two home networks using an SIP message according to an embodiment of the present invention.

FIG. 6 illustrates an operation in which a telephony server shares a memo with another telephony server by using an SIP MESSAGE method. Referring to FIG. 6, a telephony server 601 in a first home registers an SIP URL in an SIP register 602 in step 610, and a telephony server 603 in a second home registers an SIP URL in the SIP register 602 in step 620.

In step 630, the telephony server 601 in the first home transmits an SIP MESSAGE to the telephony server 603 in the second home. At this time, memory contents of the first home are included in the body of the message. In step 640, the telephony server 603 in the second home transmits an acknowledgement for the received memo to the telephony server 601 in the first home.

In step 650, the telephony server 603 in the second home transmits the SIP MESSAGE to the telephony server 601 in the first home. At this time, memo contents of the second home are included in the body of the message. In step 660, the telephony server 601 in the first home transmits an acknowledgement for the received memo to the telephony server 603 in the second home.

Meanwhile, in the operation, an SIP INVITE message may be used to transmit the memo between two telephony servers. In this case, a private SIP header may be used to discriminate the memo from other types of messages. Further, it is possible to use an SIP address to discriminate the memo from other messages. In FIG. 6, two telephony servers 601 and 603 are being connected to each other by using an SIP. At this time, it is not required to establish the UPnP remote access between the two telephony servers.

As described above, it is possible to implement an operation and a construction of the method and the apparatus for sharing the memo by using the UPnP telephony according to an embodiment of the present invention. While the present invention has been shown and described with reference to certain exemplary embodiments, various changes in form and details may be made therein without departing from the scope of the invention as defined by the appended claims.

## Claims

1. A method of sharing a memo by using UPnP telephony, the method comprising:
receiving (202) a request for a memo service from one or more devices (102-2) by a telephony server (106);
receiving (201) memo information to be shared from a first telephony control point (102-1) by the telephony server (106);
notifying (203), by the telephony server (106), the received memo information to the one or more devices (102-2) having made the request for the memo service;
receiving (204) a registration for a memo delivery from one of the devices (102-3) having made the request for the memo service; and
transferring (205) a memo according to a memo delivery method included in the registration for the memo delivery;
wherein the registration for the memo delivery includes the memo delivery method and information for a period of deregistration.

2. The method as claimed in claim 1, wherein the memo information to be shared includes memo ID information and memo contents information.

3. The method as claimed in one of claim 1 to 2, wherein the memo delivery method includes one or more information elements of an e-mail address, a telephone number, and an SIP address.

4. The method as claimed in claim 3, wherein, when the memo delivery method includes the SIP address information, the telephony server (106) transfers (205) a memo by using an SIP MESSAGE,
wherein, when the memo delivery method includes the telephone number, the telephony server (106) may transfer (205) a memo by using an SMS,
wherein, when the memo delivery method includes the e-mail address information, the telephony server (106) may transfer (205) a memo by using a SMTP.

5. The method as claimed in one of claim 1 to 4, further comprising, when a first network (510) to which the telephony server (106) pertains is connected to a second network (520) through a UPnP remote access, transferring the memo information to be shared to a device (522), which pertains to said second network (520), having subscribed the memo service.

6. An apparatus for sharing a memo by using UPnP telephony, the apparatus comprising:
a telephony server (106) arranged to:
receive (202) a request for a memo service from one or more devices (102-2);
when the telephony server (106) receives (201) memo information to be shared from a first telephony control point (102-1), notify (203) the received memo information to the one or more devices (102-2) having made the request for the memo service;
receive a registration for a memo delivery from one of the devices (102-3) having made the request for the memo service; and
transfer (205) a memo according to a memo delivery method included in the registration for the memo delivery;
wherein the registration for the memo delivery includes the memo delivery method and information for a period of deregistration.

7. The apparatus as claimed in claim 7, wherein the memo information to be shared includes memo ID information and memo contents information.

8. The apparatus as claimed in one of claims 6 to 7, wherein the memo delivery method includes one or more information elements of an e-mail address, a telephone number, an SIP address.

9. The apparatus as claimed in claim 8, wherein, when the memo delivery method includes the SIP address information, the telephony server (106) is further arranged to transfer (205) a memo by using an SIP MESSAGE;
wherein, when the memo delivery method includes the telephone number, the telephony server (106) may transfer (205) a memo by using an SMS; and
wherein, when the memo delivery method includes the e-mail address information, the telephony server (106) may transfer (205) a memo by using a SMTP.

10. The apparatus as claimed in one of claim 6 to 8, wherein when a first network (510) to which the telephony server (106) pertains is connected to a second network (520) through a UPnP remote access, the telephony server (106) is further arranged to transfer the memo information to be shared to a device (522), which pertains to said second network (520), having made the request for the memo service.

## Patentansprüche

1. Ein Verfahren zum Austausch einer Kurznachricht mithilfe einer UPnP-Telefonie, wobei das Verfahren Folgendes umfasst:
Empfangen (202) einer Anforderung eines Kurznachrichtendienstes von mindestens einer Vorrichtung (102-2), wobei dies durch einen Telefonieserver (106) erfolgt;
Empfangen (201) von auszutauschenden Kurznachrichteninformationen von einem ersten Telefoniesteuerungspunkt (102-1), wobei dies durch den Telefonieserver (106) erfolgt;
Melden (203) der empfangenen Kurznachrichteninformationen an die mindestens eine Vorrichtung (102-2), die den Kurznachrichtendienst angefordert hat, wobei dies durch den Telefonieserver (106) erfolgt;
Empfangen (204) einer Registrierung für eine Kurznachrichtenübermittlung von einer der Vorrichtungen (102-3), die den Kurznachrichtendienst angefordert haben; und
Übertragen (205) einer Kurznachricht entsprechend einem Kurznachrichtenübermittlungsverfahren, das in der Registrierung für die Kurznachrichtenübermittlung enthalten ist;
wobei die Registrierung für die Kurznachrichtenübermittlung das Kurznachrichtenübermittlungsverfahren und Informationen zu einem Zeitraum der Aufhebung der Registrierung umfasst.

2. Das Verfahren nach Anspruch 1, wobei die auszutauschenden Kurznachrichteninformationen Informationen zur Kennung der Kurznachricht und Informationen zu den Inhalten der Kurznachricht umfassen.

3. Das Verfahren nach einem der Ansprüche 1 bis 2, wobei das Kurznachrichtenübermittlungsverfahren mindestens eines der folgenden Informationselemente umfasst: eine E-Mail-Adresse, eine Telefonnummer und/oder eine SIP-Adresse.

4. Das Verfahren nach Anspruch 3, wobei der Telefonieserver (106) eine Kurznachricht mittels einer SIP-Nachricht überträgt (205), wenn das Kurznachrichtenübermittlungsverfahren die Information zur SIP-Adresse umfasst,
wobei der Telefonieserver (106) eine Kurznachricht mittels einer SMS überträgt (205), wenn das Kurznachrichtenübermittlungsverfahren die Telefonnummer umfasst,
wobei der Telefonieserver (106) eine Kurznachricht mittels eines SMTP überträgt (205), wenn das Kurznachrichtenübermittlungsverfahren die Information zur E-Mail-Adresse umfasst.

5. Das Verfahren nach einem der Ansprüche 1 bis 4, das weiter umfasst, dass die auszutauschenden Kurznachrichteninformationen an eine Vorrichtung (522) übertragen werden, die einem zweiten Netzwerk (520) angehört und die den Kurznachrichtendienst abonniert hat, wenn ein erstes Netzwerk (510), dem der Telefonieserver (106) angehört, über einen UPnP-Fernzugriff mit dem genannten zweiten Netzwerk (520) verbunden ist.

6. Eine Vorrichtung zum Austausch einer Kurznachricht mithilfe einer UPnP-Telefonie, wobei die Vorrichtung Folgendes umfasst:
einen Telefonieserver (106), der für folgende Zwecke eingerichtet ist:
Empfangen (202) einer Anforderung eines Kurznachrichtendienstes von mindestens einer Vorrichtung (102-2);
Melden (203) der empfangenen Kurznachrichteninformationen an die mindestens eine Vorrichtung (102-2), die den Kurznachrichtendienst angefordert hat, wenn der Telefonieserver (106) auszutauschende Kurznachrichteninformationen von einem ersten Telefoniesteuerungspunkt (102-1) empfängt (201);
Empfangen einer Registrierung für eine Kurznachrichtenübermittlung von einer der Vorrichtungen (102-3), die den Kurznachrichtendienst angefordert haben; und
Übertragen (205) einer Kurznachricht entsprechend einem Kurznachrichtenübermittlungsverfahren, das in der Registrierung für die Kurznachrichtenübermittlung enthalten ist;
wobei die Registrierung für die Kurznachrichtenübermittlung das Kurznachrichtenübermittlungsverfahren und Informationen zu einem Zeitraum der Aufhebung der Registrierung umfasst.

7. Die Vorrichtung nach Anspruch 7, wobei die auszutauschenden Kurznachrichteninformationen Informationen zur Kennung der Kurznachricht und Informationen zu den Inhalten der Kurznachricht umfassen.

8. Die Vorrichtung nach einem der Ansprüche 6 bis 7, wobei das Kurznachrichtenübermittlungsverfahren mindestens eines der folgenden Informationselemente umfasst: eine E-Mail-Adresse, eine Telefonnummer und/oder eine SIP-Adresse.

9. Die Vorrichtung nach Anspruch 8, wobei der Telefonieserver (106) weiter eingerichtet ist, um eine Kurznachricht mittels einer SIP-Nachricht zu übertragen (205), wenn das Kurznachrichtenübermittlungsverfahren die Information zur SIP-Adresse umfasst;
wobei der Telefonieserver (106) eine Kurznachricht mittels einer SMS überträgt (205), wenn das Kurznachrichtenübermittlungsverfahren die Telefonnummer umfasst; und
wobei der Telefonieserver (106) eine Kurznachricht mittels eines SMTP überträgt (205), wenn das Kurznachrichtenübermittlungsverfahren die Information zur E-Mail-Adresse umfasst.

10. Die Vorrichtung nach einem der Ansprüche 6 bis 8, wobei der Telefonieserver (106) weiter eingerichtet ist, um die auszutauschenden Kurznachrichteninformationen an eine Vorrichtung (522) zu übertragen, die einem zweiten Netzwerk (520) angehört und die den Kurznachrichtendienst angefordert hat, wenn ein erstes Netzwerk (510), dem der Telefonieserver (106) angehört, über einen UPnP-Fernzugriff mit dem genannten zweiten Netzwerk (520) verbunden ist.

## Revendications

1. Un procédé de partage d'un mémo au moyen de la téléphonie UPnP, le procédé comprenant :
la réception (202) d'une demande d'un service de mémos à partir d'un ou de plusieurs dispositifs (102-2) par un serveur de téléphonie (106),
la réception (201) d'informations de mémo à partager à partir d'un premier point de commande de téléphonie (102-1) par le serveur de téléphonie (106),
la notification (203), par le serveur de téléphonie (106), des informations de mémo reçues aux un ou plusieurs dispositifs (102-2) ayant effectué la demande de service de mémos,
la réception (204) d'un enregistrement pour une remise de mémos à partir d'un des dispositifs (102-3) ayant effectué la demande de service de mémos, et
le transfert (205) d'un mémo en fonction d'un procédé de remise de mémos inclus dans l'enregistrement pour la remise de mémos,
où l'enregistrement pour la remise de mémos comprend le procédé de remise de mémos et des informations relatives à une période de désenregistrement.

2. Le procédé selon la Revendication 1, où les informations de mémo à partager comprennent des informations d'identifiant de mémo et des informations de contenus de mémo.

3. Le procédé selon l'une quelconque des Revendications 1 à 2, où le procédé de remise de mémos comprend un ou plusieurs éléments d'information parmi une adresse de courrier électronique, un numéro de téléphone et une adresse SIP.

4. Le procédé selon la Revendication 3, où, lorsque le procédé de remise de mémos comprend les informations d'adresse SIP, le serveur de téléphonie (106) transfère (205) un mémo au moyen d'un MESSAGE SIP,
où, lorsque le procédé de remise de mémos comprend le numéro de téléphone, le serveur de téléphonie (106) peut transférer (205) un mémo au moyen d'un SMS,
où, lorsque le procédé de remise de mémos comprend les informations d'adresse de courrier électronique, le serveur de téléphonie (106) peut transférer (205) un mémo au moyen d'un SMTP.

5. Le procédé selon l'une quelconque des Revendications 1 à 4, comprenant en outre, lorsqu'un premier réseau (510) auquel le serveur de téléphonie (106) se rapporte est connecté à un deuxième réseau (520) par l'intermédiaire d'un accès distant UPnP, le transfert des informations de mémo à partager vers un dispositif (522), qui se rapporte audit deuxième réseau (520), qui s'est abonné au service de mémos.

6. Un appareil de partage d'un mémo au moyen de la téléphonie UPnP, l'appareil comprenant :
un serveur de téléphonie (106) agencé de façon à :
recevoir (202) une demande d'un service de mémos à partir d'un ou de plusieurs dispositifs (102-2),
lorsque le serveur de téléphonie (106) reçoit (201) des informations de mémo à partager à partir d'un premier point de commande de téléphonie (102-1), notifier (203) les informations de mémo reçues aux un ou plusieurs dispositifs (102-2) ayant effectué la demande de service de mémos,
recevoir un enregistrement pour une remise de mémos à partir d'un des dispositifs (102-3) ayant effectué la demande de service de mémos, et
transférer (205) un mémo en fonction d'un procédé de remise de mémos inclus dans l'enregistrement pour la remise de mémos,
où l'enregistrement pour la remise de mémos comprend le procédé de remise de mémos et des informations relatives à une période de désenregistrement.

7. L'appareil selon la Revendication 7, où les informations de mémo à partager comprennent des informations d'identifiant de mémo et des informations de contenus de mémo.

8. L'appareil selon l'une quelconque des Revendications 6 à 7, où le procédé de remise de mémos comprend un ou plusieurs éléments d'information parmi une adresse de courrier électronique, un numéro de téléphone et une adresse SIP.

9. L'appareil selon la Revendication 8, où, lorsque le procédé de remise de mémos comprend les informations d'adresse SIP, le serveur de téléphonie (106) est agencé en outre de façon à transférer (205) un mémo au moyen d'un MESSAGE SIP,
où, lorsque le procédé de remise de mémos comprend le numéro de téléphone, le serveur de téléphonie (106) peut transférer (205) un mémo au moyen d'un SMS, et
où, lorsque le procédé de remise de mémos comprend les informations d'adresse de courrier électronique, le serveur de téléphonie (106) peut transférer (205) un mémo au moyen d'un SMTP.

10. L'appareil selon l'une quelconque des Revendications 6 à 8, où lorsqu'un premier réseau (510) auquel le serveur de téléphonie (106) se rapporte est connecté à un deuxième réseau (520) par l'intermédiaire d'un accès distant UPnP, le serveur de téléphonie (106) est agencé en outre de façon à transférer les informations de mémo à partager à un dispositif (522), qui se rapporte audit deuxième réseau (520), qui a effectué la demande de service de mémos.
